(19) Europäisches Patentamt
European Patent Office
Office européen des brevets

(11) **EP 4 661 091 A1**

(12) **EUROPEAN PATENT APPLICATION**
published in accordance with Art. 153(4) EPC

(43) Date of publication:
**10.12.2025  Bulletin 2025/50**

(21) Application number: **23919097.8**

(22) Date of filing: **03.02.2023**

(51) International Patent Classification (IPC):
**H01M 4/13** (2010.01)        **H01M 10/0585** (2010.01)
**H01M 10/052** (2010.01)        **H01M 4/139** (2010.01)

(52) Cooperative Patent Classification (CPC):
**H01M 4/587; H01M 50/461;** H01M 4/386;
H01M 10/0525; H01M 10/0587; Y02E 60/10

(86) International application number:
**PCT/CN2023/074396**

(87) International publication number:
**WO 2024/159521 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ningde Amperex Technology Limited**
**Ningde, Fujian 352100 (CN)**

(72) Inventor: **KONG, Sen**
**Ningde, Fujian 352100 (CN)**

(74) Representative: **Icosa**
**83 avenue Denfert-Rochereau**
**75014 Paris (FR)**

(54) **SECONDARY BATTERY AND ELECTRONIC APPARATUS**

(57)    A secondary battery includes an electrode assembly (10), and the electrode assembly (10) includes a positive electrode plate (20), a negative electrode plate (30), and a separator (40). The separator (40) is disposed between the positive electrode plate (20) and the negative electrode plate (30), and the negative electrode plate (30) includes a negative electrode current collector (31) and a negative electrode active material layer (32). A surface of the negative electrode active material layer (32) opposite the positive electrode plate (20) has a groove (321), a depth of the groove (321) being H µm. The separator (40) includes a substrate layer (41) and an adhesive layer (43), a thickness of the adhesive layer (43) being T µm, and satisfying: $H \geq T + 1$.

FIG. 2

**Description**

**TECHNICAL FIELD**

This application relates to the field of electrochemical technologies, and in particular, to a secondary battery and an electronic apparatus.

**BACKGROUND**

Secondary batteries, such as lithium-ion batteries, have been widely used in the field of consumer electronics by virtue of their characteristics such as high specific energy, high working voltage, low self-discharge rate, small size, and light weight. With the wide use of lithium-ion batteries, the market imposes increasingly high requirements for the performance of lithium-ion batteries.

During repeated charge and discharge cycles, lithium-ion batteries accumulate stress internally, causing deformation, which leads to issues such as exceeding thickness specifications and accelerated capacity decay, thereby affecting the cycling stability of lithium-ion batteries. Additionally, as heat accumulates inside the lithium-ion battery during cycling, if the heat cannot be dissipated in time, the risk of thermal runaway increases, thus affecting the safety of the lithium-ion battery.

**SUMMARY**

The objective of this application is to provide a secondary battery and an electronic apparatus with good cycling stability and safety.

It should be noted that in the content of this application, an example in which a lithium-ion battery is used as a secondary battery is used to illustrate this application. However, the secondary battery of this application is not limited to the lithium-ion battery. Specific technical solutions are as follows.

A first aspect of this application provides a secondary battery, including an electrode assembly, where the electrode assembly includes a positive electrode plate, a negative electrode plate, and a separator, the separator being disposed between the positive electrode plate and the negative electrode plate, and the negative electrode plate includes a negative electrode current collector and a negative electrode active material layer, where a surface of the negative electrode active material layer opposite the positive electrode plate has a groove, a depth of the groove being H $\mu$m; and the separator includes a substrate layer and an adhesive layer disposed on a surface of the separator opposite the negative electrode plate, a thickness of the adhesive layer being T $\mu$m, and satisfying: H $\geq$ T + 1. Preferably, H $\geq$ T + 5. In this application, through the regulation of the depth of the groove and the thickness of the adhesive layer to satisfy a range in this application, the conduction effect of the groove on the electrolyte and high-temperature gas generated under high-temperature conditions can be enhanced, thereby internal heat dissipation capability of the secondary battery can be increased and the high-temperature performance of the secondary battery can be improved.

In some embodiments of this application, a cross-sectional area of the groove is A $\mu$m$^2$, and a width of the groove is W $\mu$m, satisfying: $0.35 \times (W \times H) < A < 0.95 \times (W \times H)$, and $5 \leq H \leq 100$. Preferably, $0.55 \times (W \times H) < A < 0.85 \times (W \times H)$. Through the adjustment of the cross-sectional area of the groove, the interfacial morphology at the groove can be adjusted, thereby further improving the interfacial heat dissipation effect of the electrode plate under high-temperature hot box conditions, enhancing the heat dissipation capability inside the lithium-ion battery, and improving the cycling stability and safety of the lithium-ion battery at high temperatures.

In some embodiments of this application, $1 \leq W/H \leq 40$. Preferably, $2 \leq W/H \leq 20$, which can further improve the heat dissipation capability inside the lithium-ion battery, enhancing the cycling stability and safety of the lithium-ion battery at high temperatures.

In some embodiments of this application, a width of the groove is W $\mu$m, a spacing of the grooves is S $\mu$m, and a porosity of the negative electrode plate is P%, satisfying: $\dfrac{W}{S} \geq 0.03 \times P$. Preferably, $0.08 \times P \leq \dfrac{W}{S} \leq 3 \times P$. Adjusting the porosity of the negative electrode plate, the width of the groove, and the spacing of the grooves to satisfy the above relationships can effectively improve the heat balance of the electrode plate under high-temperature conditions, enhance the heat diffusion efficiency in extreme environments, reduce the thermal runaway risk of the lithium-ion battery, and improve the safety performance of the lithium-ion battery. Additionally, the space provided by the groove can be used to release the stress generated inside the lithium-ion battery during high-temperature cycling, thereby alleviating the cycling deformation problem of the lithium-ion battery and enhancing the cycling stability of the lithium-ion battery.

In some embodiments of this application, a spacing of the grooves is S $\mu$m, and an adhesion force between the separator and the negative electrode plate is F N/m, satisfying: S $\leq$ 1000F, and $500 \leq S \leq 10000$. Preferably, S $\leq$ 650F. This can improve the heat dissipation capability inside the lithium-ion battery, reduce the thermal runaway risk of the lithium-ion battery, and enhance the safety performance of the lithium-ion battery.

In some embodiments of this application, $0.1 \leq T \leq 10$. Regulating the thickness of the adhesive layer within the above range is beneficial to enhance the performance of adhesion between the separator and the electrode plate including the groove, thereby improving the safety performance of the lithium-ion battery.

In some embodiments of this application, the adhesive layer includes a polymer, where based on a mass of the adhesive layer, a percentage of the polymer is 25% to 100%. Preferably, the percentage of the polymer is 30% to 100%, and further preferably, the percentage of the polymer is 50% to 100%. Regulating the percentage of the polymer within the above range is conducive to improving the adhesion force at the separator interface, thereby alleviating the deformation problem of the lithium-ion battery and enhancing the cycling stability and safety of the lithium-ion battery at high temperatures.

In some embodiments of this application, an adhesion force between the separator and the negative electrode plate is F N/m, satisfying: $1 \leq F \leq 50$. Preferably, $5 \leq F \leq 30$. Further preferably, $7 \leq F \leq 30$. Through the regulation of the adhesion force between the separator and the negative electrode within the above range, the cycling deformation problem of the lithium-ion battery can be alleviated, thereby enhancing the cycling stability of the lithium-ion battery.

In some embodiments of this application, the polymer includes at least one of polyvinylidene fluoride, polyvinylidene fluoride-hexafluoropropylene copolymer, styrene-butadiene copolymer, polyacrylonitrile, butadiene-acrylonitrile polymer, polyacrylic acid, polyacrylate, or acrylate-styrene copolymer.

In some embodiments of this application, the negative electrode plate further includes a negative electrode tab, and along a length direction of the negative electrode tab, a first groove portion is provided, and along the length direction of the negative electrode tab, the negative electrode active material layer is provided between the first groove portion and the negative electrode tab; where a distance between the first groove portion and the negative electrode tab is d mm, where 0.2 < d < 5. On one hand, this can optimize the heat dissipation effect under high-temperature conditions. On the other hand, due to the retention of the negative electrode active material layer between the groove and the tab region along the length direction of the negative electrode tab, this can further improve ion conduction in the tab region, enhance the electrochemical interface in the region, thereby enhancing the cycling performance of the secondary battery. Additionally, the separated design of the groove and the tab region can avoid secondary processing of a local region of the current collector, thereby improving the yield rate of the negative electrode plate.

A second aspect of this application provides an electronic apparatus including the secondary battery according to the foregoing embodiments. Thus, the electronic apparatus has good high-temperature cycling stability and safety.

This application provides a secondary battery and an electronic apparatus, where a surface of the negative electrode active material layer opposite the positive electrode plate has a groove, a depth of the groove being H $\mu$m; and the separator includes a substrate layer and an adhesive layer disposed on a surface of the separator opposite the negative electrode plate, a thickness of the adhesive layer being T $\mu$m, and satisfying: $H \geq T + 1$. In this application, through the regulation of the depth of the groove and the thickness of the adhesive layer to satisfy a range in this application, internal heat dissipation capability of the secondary battery can be increased, thereby improving the high-temperature performance of the secondary battery.

## DETAILED DESCRIPTION

The accompanying drawings described herein are intended for better understanding of this application, and constitute a part of this application. Exemplary embodiments and descriptions thereof in this application are intended to interpret this application and do not constitute any improper limitation on this application.

FIG. 1 is a schematic structural diagram of an electrode assembly according to some embodiments of this application;

FIG. 2 is a schematic diagram showing a partial sectional structure of an electrode assembly along its thickness direction according to some embodiments of this application;

FIG. 3 is a schematic diagram showing a partial sectional structure of a negative electrode plate along its thickness direction according to some embodiments of this application;

FIG. 4 is a partial top view of a negative electrode plate along its thickness direction according to some embodiments of this application;

FIG. 5 is a schematic diagram showing a sectional structure of a separator along its thickness direction according to some embodiments of this application;

FIG. 6 is a schematic diagram showing a sectional structure of a separator along its thickness direction according to some other embodiments of this application;

FIG. 7 is a schematic structural diagram of a negative electrode plate according to some embodiments of this application; and

FIG. 8 is a schematic diagram of groove profile determination and groove parameter measurement according to some embodiments of this application.

Reference signs: 10-electrode assembly, 20-positive electrode plate, 21-positive electrode current collector, 22-positive electrode active material layer, 30-negative electrode plate, 31-negative electrode current collector, 32-negative electrode active material layer, 33-negative electrode tab, 34-uncoated foil zone, 40-separator, 41-substrate layer, 42-inorganic coating, 43-adhesive layer, 321-groove, and 322-first groove portion.

## DESCRIPTION OF EMBODIMENTS

To make the objectives, technical solutions, and advantages of this application more comprehensible, the following describes this application in detail with reference to accompanying drawings and embodiments. Apparently, the described embodiments are merely some but not all of the embodiments of this application. All other embodiments obtained by persons of ordinary skill in the art based on the embodiments of this application shall fall within the protection scope of this application.

It should be noted that in specific embodiments, an example in which a lithium-ion battery is used as a secondary battery is used to illustrate this application. However, the secondary battery of this application is not limited to the lithium-ion battery. Specific technical solutions are as follows:

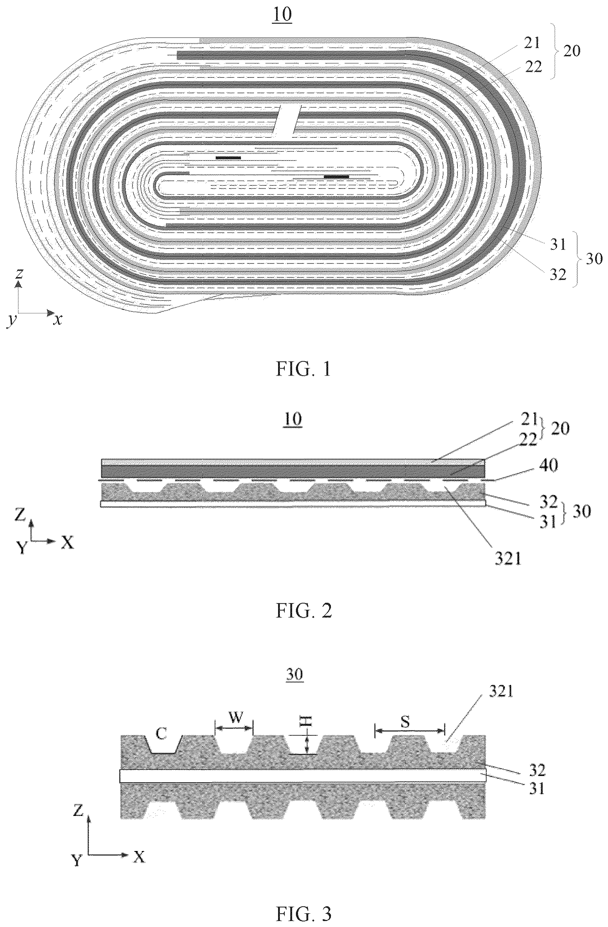

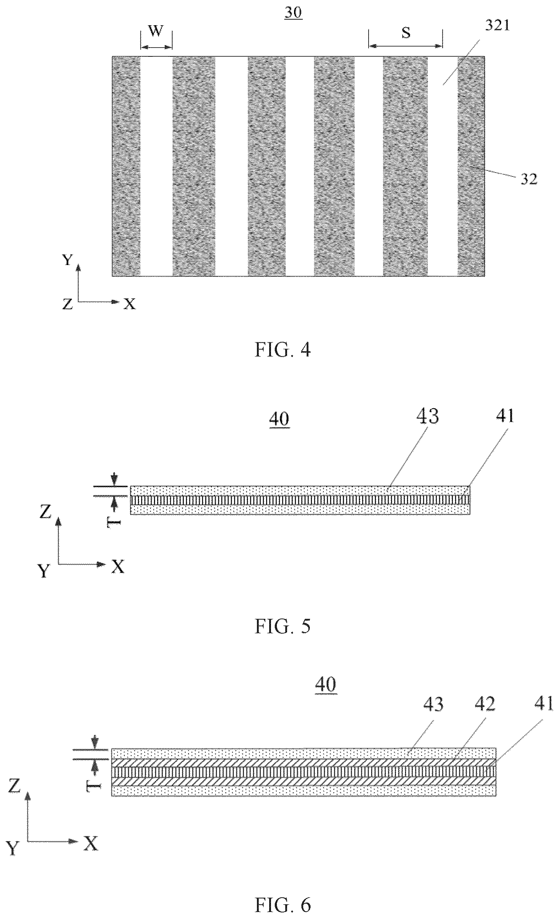

According to a first aspect, a secondary battery is provided as shown in FIG. 1, which includes an electrode assembly 10, where the X direction is a length direction of the electrode assembly 10, the Y direction is a width direction of the electrode assembly 10, and the Z direction is a thickness direction of the electrode assembly 10. As shown in FIG. 2, the electrode assembly 10 includes a positive electrode plate 20, a negative electrode plate 30, and a separator 40, the separator 40 is disposed between the positive electrode plate 20 and the negative electrode plate 30, the positive electrode plate 20 includes a positive electrode current collector 21 and a positive electrode active material layer 22, and the negative electrode plate 30 includes a negative electrode current collector 31 and a negative electrode active material layer 32, where a surface of the negative electrode active material layer 32 opposite the positive electrode plate 20 has a groove 321. As shown in FIG. 3, a depth of the groove is H $\mu$m. As shown in FIG. 5, the separator 40 includes a substrate layer 41 and an adhesive layer 43, and a thickness of the adhesive layer being T $\mu$m, and satisfying: $H \geq T + 1$. Preferably, $H \geq T + 5$. In this application, the adhesive layer 43 may be a surface layer of the separator 40 opposite the negative electrode plate 30.

During the preparation of the lithium-ion battery, due to the combined effect of external pressure and a pressure generated by internal swelling of the electrode assembly, the polymer in the adhesive layer of the separator is compressed, thus producing an adhesive effect. At the groove, when the adhesive layer is stressed, a local adhesion force is generated between the adhesive layer and the groove. However, an excessively thick adhesive layer can alter the heat distribution inside the electrode assembly under high-temperature conditions, thus affecting the heat dissipation effect of the groove and the improvement effect on the high-temperature hot box. The inventor has found that in this application, through the regulation of the depth of the groove and the thickness of the adhesive layer to satisfy a range in this application, the heat dissipation effect of the groove under high-temperature conditions can be enhanced, thereby improving the heat dissipation capability inside the lithium-ion battery and enhancing the high-temperature performance of the lithium-ion battery, such as improving the cycling stability and safety of the lithium-ion battery at high temperatures. In this application, the negative electrode active material layer 32 may be provided on a single side or on two sides.

In some embodiments of this application, a cross-sectional area of the groove is A $\mu$m$^2$, and a width of the groove is W $\mu$m, satisfying: $0.35 \times (W \times H) < A < 0.95 \times (W \times H)$, and $5 \leq H \leq 100$. Preferably, $0.55 \times (W \times H) < A < 0.85 \times (W \times H)$. Regulating C, W, and H to satisfy the above relationships, in coordination with the regulation of H within the above range, can implement the adjustment of the interfacial morphology at the groove, thereby further improving the interfacial heat dissipation effect of the electrode plate under high-temperature hot box conditions, enhancing the heat dissipation capability inside the lithium-ion battery, and improving the electrochemical bonding of the adhesive layer of the separator and the electrode plate at the groove, thus enhancing the cycling stability and safety of the lithium-ion battery at high temperatures.

In some embodiments of this application, $1 \leq W/H \leq 40$. Preferably, $2 \leq W/H \leq 20$. Through further regulation of W and H to satisfy the above relationship, the internal heat dissipation capability of the lithium-ion battery can be further improved, thereby enhancing the cycling stability and safety of the lithium-ion battery under high temperatures.

In some embodiments of this application, as shown in FIG. 3 and FIG. 4, a width of the groove is W $\mu$m, a spacing of the grooves is S $\mu$m, and a porosity of the negative electrode plate is P%, satisfying: $W/S \geq 0.03 \times P$. Preferably, $0.08 \times P \leq W/S \leq 3 \times P$. The inventor has found that high-temperature hot box failure is mainly due to contact between a surface of the active material layer of the negative electrode plate and the electrolyte, causing side reactions under high-temperature conditions, and the heat generated by the side reactions accumulates inside the battery, increasing the risk of thermal runaway. When the porosity of the negative electrode plate is larger, a contact area between the negative electrode active material layer and the electrolyte is larger, generating more heat and increasing the risk of thermal runaway. Additionally, a lowporosity negative electrode plate has a smaller swelling space, causing deformation problem in the lithium-ion battery due to swelling. Based on this, in this application, through the regulation of the width of the groove, the spacing of the grooves, and the porosity of the negative electrode plate to satisfy the above relationships, the heat dissipation effect of the groove under high-temperature hot box conditions can be improved, the heat diffusion efficiency in extreme environments can be improved, the thermal runaway risk of the lithium-ion battery can be reduced, and the safety performance of the lithium-ion battery can be enhanced. Additionally, the groove can effectively disperse the gas generated during high-temperature cycling, improve the interfacial electrochemical performance between the separator and the electrode plate, and enhance the high-temperature cycling stability of the lithium-ion battery.

In some embodiments of this application, the negative electrode plate of the lithium-ion battery satisfies $5 \le P \le 50$. Preferably, $10 \le P \le 40$. More preferably, $10 \le P \le 30$. Regulating the above parameters within the ranges in this application is beneficial to obtain a lithium-ion battery with good high-temperature cycling stability and safety.

In some embodiments of this application, as shown in FIG. 3 and FIG. 4, the spacing of the grooves is $S\ \mu m$, and the adhesion force between the separator and the negative electrode plate is F N/m, satisfying: $S \le 1000F$, and $500 \le S \le 10000$. Preferably, $S \le 650F$. The inventor has found that different types of separators have different interfacial adhesion performances. High-adhesion performance separators have a good effect on alleviating the deformation of lithium-ion batteries, but the heat dissipation effect is reduced. Based on this, in this application, through the regulation of S and F to satisfy the above relationships, even for separators with different adhesion performances, the conduction effect of the groove on high-temperature gas generated under high-temperature hot box conditions can be enhanced, thereby improving the heat dissipation capability inside the lithium-ion battery, reducing the thermal runaway risk, and enhancing the safety performance of the lithium-ion battery.

In some embodiments of this application, $0.1 \le T \le 10$. Regulating the thickness of the adhesive layer within the above range is beneficial to enhance the performance of adhesion between the separator and the electrode plate including the groove, thereby improving the safety performance of the lithium-ion battery.

The adhesive layer includes a polymer; where based on a mass of the adhesive layer, a percentage of the polymer is 25% to 100%. Preferably, the percentage of the polymer is 30% to 100%. Regulating the percentage of the polymer within the above range is conducive to improving the adhesion force at the separator interface, thereby alleviating the deformation problem of the lithium-ion battery and enhancing the cycling stability and safety of the lithium-ion battery at high temperatures.

In some embodiments of this application, as shown in FIG. 5, the adhesive layer 43 is located on a surface of the substrate layer 41, and the adhesive layer 43 includes a polymer and an inorganic material. The synergistic effect of the above structural design and material selection is conducive to improving the adhesion force at the separator interface, thereby alleviating the deformation problem of the lithium-ion battery and enhancing the cycling stability and safety of the lithium-ion battery at high temperatures.

In some embodiments of this application, as shown in FIG. 6, the separator further includes an inorganic coating 42, where the inorganic coating 42 is located between the substrate layer 41 and the adhesive layer 43. The inorganic coating 42 includes an inorganic material, and the adhesive layer 43 includes a polymer. The synergistic effect of the above structural design and material selection is conducive to improving the adhesion force at the separator interface, thereby alleviating the deformation problem of the lithium-ion battery and enhancing the cycling stability and safety of the lithium-ion battery at high temperatures.

In some embodiments of this application, $1 \le F \le 50$. Preferably, $5 \le F \le 30$. Further preferably, $7 \le F \le 30$. Through the regulation of the adhesion force between the separator and the negative electrode within the above range, the cycling deformation problem of the lithium-ion battery can be alleviated, thereby enhancing the cycling stability of the lithium-ion battery.

In some embodiments of this application, the polymer includes at least one of polyvinylidene fluoride, polyvinylidene fluoride-hexafluoropropylene copolymer, styrene-butadiene copolymer, polyacrylonitrile, butadiene-acrylonitrile polymer, polyacrylic acid, polyacrylate, or acrylate-styrene copolymer. When the separator includes the above polymers, it is conducive to improving the interfacial adhesion performance of the separator.

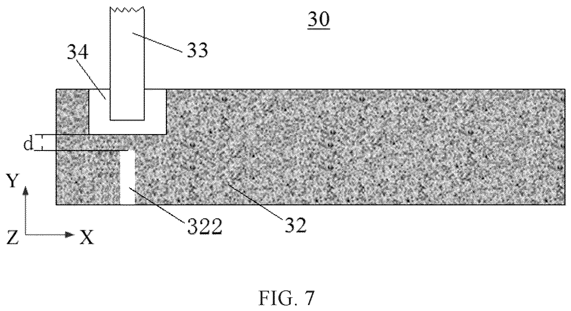

Referring to FIG. 7, the negative electrode tab 33 is usually welded to an uncoated foil zone 34 of the negative electrode plate 30 (a region of the negative electrode plate not coated with the negative electrode active material). The inventor has found that during the cycling of the lithium-ion battery, heat buildup tends to occur at the negative electrode tab, affecting the heat dissipation of the lithium-ion battery. In some embodiments of this application, as shown in FIG. 7, the negative electrode plate 30 further includes a negative electrode tab 33, and the groove 321 is provided along a length direction of the negative electrode tab 33 (that is, the Y direction); along the length direction of the negative electrode tab 33, a first groove portion 322 is provided; and along the length direction of the negative electrode tab 33, the negative electrode active material layer is provided between the first groove portion 322 and the negative electrode tab 33; where a distance between the first groove portion 322 and the negative electrode tab 33 is d mm, where $0.2 < d < 5$. In this application, the above structure is used. On one hand, this can optimize the heat dissipation effect under high-temperature conditions. On the other hand, due to the retention of the negative electrode active material layer between the groove and the tab region along the length direction of the negative electrode tab, this can further improve ion conduction in the tab region, enhance the electrochemical interface in the region, thereby enhancing the cycling performance of the secondary battery. Additionally, the separated design of the groove and the tab region can avoid secondary processing of a local region of the current collector, thereby improving the yield rate of the negative electrode plate.

It can be understood that the electrode assembly of this application may be a wound structure, and its electrode plate usually has a long edge and a short edge when unfolded. In one embodiment of this application, the electrode assembly is of a wound structure, where the width direction is an extension direction of the short edge of the electrode plate when unfolded, and the length direction is an extension direction of the long edge of the electrode plate when unfolded. The electrode plate of this application includes a positive electrode plate 20 and a negative electrode plate 30.

The secondary battery of this application may include any apparatus in which an electrochemical reaction occurs, provided that the objectives of this application can be achieved. For example, the secondary battery may include but is not limited to a lithium-ion secondary battery (lithium-ion battery), a sodium-ion secondary battery, a lithium polymer secondary battery, or a lithium-ion polymer secondary battery. The structure of the battery in this application includes but is not limited to a pouch battery, a prismatic hard-shell battery, or a cylindrical hard-shell battery.

The negative electrode current collector is not particularly limited in this application, provided that the objectives of this application can be achieved. For example, the negative electrode current collector may include copper foil, copper alloy foil, nickel foil, stainless steel foil, titanium foil, foamed nickel, foamed copper, a composite current collector, or the like. A thickness of the negative electrode current collector is not particularly limited in this application, provided that the objectives of this application can be achieved. For example, the thickness of the negative electrode current collector ranges from 4 $\mu$m to 10 $\mu$m. In this application, the negative electrode active material layer may be disposed on one or two surfaces of the negative electrode current collector in a thickness direction of the negative electrode current collector. It should be noted that the "surface" herein may be an entire region or a partial region of the negative electrode current collector. This is not particularly limited in this application, provided that the objectives of this application can be achieved.

A type of the negative electrode active material is not particularly limited in this application, provided that the objectives of this application can be achieved. For example, the negative electrode active material may include graphite, mixtures of graphite and silicon, silicon oxide, or silicon carbide, and other silicon materials. The graphite may be selected from artificial graphite or natural graphite. Optionally, the negative electrode active material layer further includes at least one of a conductive agent, a thickener, or a binder. A type of the conductive agent, thickener, or binder in the negative electrode active material layer is not particularly limited in this application, provided that the objectives of this application can be achieved. For example, the negative electrode binder may include but is not limited to at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, polyacrylic acid, styrene butadiene rubber, acrylated styrene butadiene rubber, epoxy resin, or nylon. A mass ratio of the negative electrode active substance, the conductive agent, the thickener, and the binder in the negative electrode active substance layer is not particularly limited in this application, provided that the objectives of this application can be achieved. For example, the mass ratio of the negative electrode active material, the conductive agent, the thickener, and the binder in the negative electrode active material layer is (96-98):(0-1.5):(0.5-1.5):(1.0-1.9).

A material of the substrate layer of the separator is not particularly limited in this application. Persons skilled in the art can make a selection based on actual needs, provided that the objectives of this application can be achieved. For example, the material of the substrate layer of the separator may include but is not limited to at least one of polyethylene, polypropylene, polyethylene terephthalate, or polyimide. Optionally, a polypropylene porous film, a polyethylene porous film, polypropylene non-woven fabric, polyethylene non-woven fabric, or a polypropylene-polyethylene-polypropylene porous composite film may be used.

The secondary battery in this application further includes an electrolyte. The electrolyte is not particularly limited in this application. Persons skilled in the art can make a selection based on actual needs, provided that the objectives of this application can be achieved. For example, at least one of ethylene carbonate (also referred to as ethylene carbonate, EC for short), propylene carbonate (PC), diethyl carbonate (DEC), ethyl propionate (EP), propyl propionate (PP), ethyl methyl carbonate (EMC), dimethyl carbonate (DMC), vinylene carbonate (VC), or fluoroethylene carbonate (FEC) is mixed at a specific mass ratio to obtain a non-aqueous organic solvent, and then a lithium salt is added for dissolving and mixing to uniformity. The "mass ratio" is not particularly limited in this application, provided that the objectives of this application can be achieved. Type of the lithium salt is not limited in this application, provided that the objectives of this application can be achieved. For example, the lithium salt may include at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, lithium bis(oxalato)borate (LiBOB), or lithium difluoroborate. Concentration of the lithium salt in the electrolyte is not particularly limited in this application, provided that the objectives of this application can be achieved. For example, the concentration of the lithium salt is 1.0 mol/L to 2.0 mol/L.

The positive electrode plate of this application may include a positive electrode active material layer and a positive electrode current collector. A type of the positive electrode active material is not particularly limited in this application, provided that the objectives of this application can be achieved. For example, the positive electrode active material may include at least one of lithium nickel cobalt manganese oxide, lithium nickel cobalt aluminum oxide, lithium iron phosphate, lithium-rich manganese-based materials, lithium cobalt oxide, lithium manganese oxide, or lithium iron manganese phosphate In this application, the positive electrode active material may further include a non-metal element, for example, the non-metal element includes at least one of fluorine, phosphorus, boron, chlorine, silicon, or sulfur. These elements can further improve stability of the positive electrode active material. The positive electrode active material layer of this application may further include a conductive agent and a binder. The mass ratio of the positive electrode active material, the conductive agent, and the binder in the positive electrode active material layer is not particularly limited in this application. Persons skilled in the art can make a selection based on actual needs as long as the objectives of this application can be achieved. For example, the mass ratio of the positive electrode active material, the conductive agent, and the binder in the positive electrode active material layer is (96-98):(1-3):(2-3).

The positive electrode current collector is not particularly limited in this application, provided that the objectives of this application can be achieved. For example, the positive electrode current collector may include aluminum foil, aluminum alloy foil, a composite current collector, or the like. A thickness of the positive electrode current collector is not particularly limited in this application, provided that the objectives of this application can be achieved. For example, the thickness of the positive electrode current collector ranges from 5 $\mu$m to 20 $\mu$m. In this application, the positive electrode active material layer may be disposed on one surface of the positive electrode current collector in a thickness direction thereof, or may be disposed on two surfaces of the positive electrode current collector in the thickness direction thereof. It should be noted that the "surface" herein may be an entire region or a partial region of the positive electrode current collector. This is not particularly limited in this application, provided that the objectives of this application can be achieved.

The preparation method of the negative electrode plate is not particularly limited in this application, provided that the objectives of this application can be achieved. For example, the preparation method of the negative electrode plate includes but is not limited to the following steps: the negative electrode active material, conductive agent, thickener, and binder are dispersed in deionized water and mixed to form a uniform negative electrode slurry; and the negative electrode slurry is applied on a negative electrode current collector, followed by drying and cold pressing; and grooves are prepared on a surface of the negative electrode plate, followed by cutting and slitting to obtain the negative electrode plate with the structure as shown in FIG. 3.

The preparation method of the positive electrode plate is not particularly limited in this application, provided that the objectives of this application can be achieved. For example, the preparation method of the positive electrode plate includes but is not limited to the following steps: the positive electrode active material, conductive agent, and binder are dispersed in an NMP solvent and mixed to form a uniform positive electrode slurry; and the positive electrode slurry is applied on a positive electrode current collector, followed by drying, cold pressing, cutting, and slitting to obtain a positive electrode plate.

A shape of the groove is not particularly limited in this application, provided that the objectives of this application can be achieved. For example, when observed from a length direction of the negative electrode plate, the shape of the groove may include at least one of square, rectangular, trapezoidal, triangular, or semicircular; and when observed from a thickness direction of the negative electrode plate, the shape of the groove may include at least one of linear, oblique, zigzag, or curved.

A method of preparing the groove is not particularly limited in this application, provided that the objectives of this application can be achieved. For example, it can include but is not limited to laser etching, mechanical processing, or pore-forming agent processing. Taking laser etching as an example, the width and depth of the groove usually increase with the power of the laser; and the spacing of the grooves can usually be adjusted through the processing rate of the laser. Therefore, technical personnel can adjust parameters such as the power, processing rate, and tape running rate of the laser to adjust the width of the groove, the depth of the groove, and spacing of the grooves.

The porosity of the negative electrode plate usually decreases with the increase of the compacted density of the negative electrode plate. Based on this, the porosity of the negative electrode plate can be adjusted by adjusting the cold pressing pressure of the negative electrode plate to regulate the compacted density of the negative electrode plate.

A preparation method of secondary battery is not particularly limited in this application, and a well-known preparation method in the art can be used, provided that the objectives of this application can be achieved. For example, the preparation method of the secondary battery includes but is not limited to the following steps: the positive electrode plate, separator, and negative electrode plate are stacked in sequence, and as needed, they are subjected to operations such as winding or folding to obtain a wound structure electrode assembly. The electrode assembly is placed into a packaging bag, an electrolyte is injected into the packaging bag, and the bag is sealed to obtain a secondary battery.

A second aspect of this application provides an electronic apparatus including the secondary battery according to the foregoing embodiments. Thus, the electronic apparatus has good cycling stability and safety.

The electronic apparatus is not particularly limited in this application, and the electronic apparatus may be any known electronic apparatus in the prior art. In some embodiments, the electronic apparatus may include but is not limited to notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, lithium-ion capacitors, or the like.

**Examples**

The following describes the embodiments of this application more specifically by using examples and comparative examples. Various tests and evaluations are performed in the following methods.

**Test method and device:**

**Test for adhesion force F between negative electrode plate and separator:**

A negative electrode plate with dimensions of width $\times$ length = 15 mm $\times$ 60 mm, adhered with a separator, was cut. Double-sided tape with dimensions of width $\times$ length = 20 mm $\times$ 100 mm was used to fix the sample onto a steel plate with the test surface facing down. A paper strip, with a width equal to the sample and a length 150 mm longer than the sample length, was inserted under the sample and fixed with crepe tape. The steel plate was fixed at the bottom of a Gotech tensile machine, and another end of the paper strip was fixed to the upper clamp of the Gotech tensile machine. The Gotech tensile machine was then started. Once the tensile force is stabilized, the tensile force data was the adhesion force.

**Adhesive layer thickness test:**

A part of the separator in the electrode assembly that was not opposite the positive electrode active material layer or the negative electrode active material layer was selected. A cross-section of the separator was prepared using ion beam cross-section polishing (CP). The thickness of the adhesive layer was then measured using a scanning electron microscope (ZEISS Sigma/X-max).

**Measurement of groove depth H, groove width W, groove spacing S, and groove cross-sectional area A:**

A laser confocal microscope with a model of VK-1050 was used to capture images of the groove region to obtain optical and depth information of the electrode plate within the field of view of the microscope. At 20x magnification, a surface of the electrode plate was scanned in the laser confocal mode. After scanning, the obtained measurement data was processed using the data analysis software associated with the instrument. The "Baseline Setting" function in the "Process Image" menu was used to set the baseline for the measurement data. Then, the "Smoothing" function with a "5$\times$5" size and "Simple Average" type was applied to smooth the image. After processing, the "Profile Measurement" function was used to measure the groove parameters.

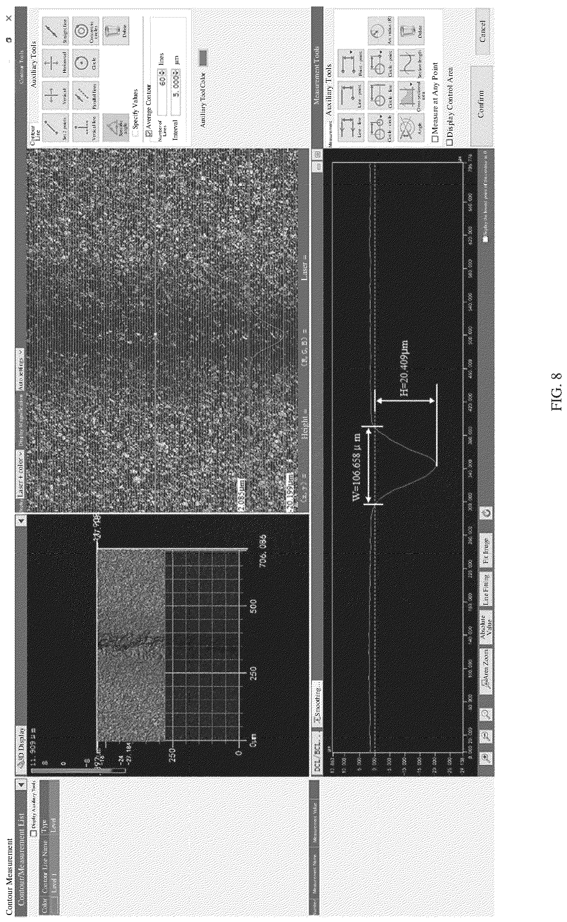

Groove depth H and groove width W: As shown in FIG. 8, the depth difference between the deepest part of the groove and the baseline was the groove depth, and the distance between the intersection points of the two groove sides and the baseline was the groove width. The measurement was taken once every 10 $\mu$m along a same groove, with a total of 20 measurements. The average depth and width of the 20 measurements were calculated and recorded as the groove depth H and width W.

Groove spacing S: For adjacent grooves (when observed along the length direction of the electrode plate, where the overlapping part of two adjacent grooves exceeds 50% of their respective lengths), a distance between the midpoints of the widths of the two grooves in a vertical direction of the grooves was the groove spacing. Measurement was taken every 10 $\mu$m along a selected groove, with a total of 20 measurements. The average value was calculated and recorded as the groove spacing S.

Groove Area A: A laser confocal microscope with a model of VK-1050 was used to capture images of the groove area to obtain optical and depth information of the electrode plate within the field of view of the microscope. At 20x magnification, a surface of the electrode plate was scanned in the laser confocal mode. After scanning, the depth data relative to the baseline was obtained for each pixel width. Within the groove width range, the depth ($h_i$) for each pixel width ($w_o$) was integrated to obtain the cross-sectional area A of the groove:

$$A = \sum_i h_i \times w_0.$$

**Porosity test for negative electrode plate**

The porosity of the negative electrode plate was tested using the gas displacement method. Fifty negative electrode plates with a radius d were punched using the same mold. The thickness h of each negative electrode plate was measured, and the 50 negative electrode plates were loaded into the sample cup of the testing equipment (AccuPyc II 1340). Helium gas was used to fill the negative electrode plates in a sealed sample chamber, and the true volume V of the negative electrode plates was measured. The porosity of the negative electrode plates was then calculated using the following formula: $(1 - V/\pi d^2 \times 50 \times h) \times 100\%$.

**High-temperature capacity retention rate and high-temperature thickness swelling rate test for lithium-ion battery:**

At 45°C, the lithium-ion battery was charged at a constant current of 0.7C to a voltage of 4.5 V, charged at a constant voltage of 4.5 V to a current of 0.05C, and then discharged at a constant current of 1C to a voltage of 3.0 V. This was one charge and discharge cycle. After 400 repeated charge-discharge cycles, the high-temperature capacity retention rate and high-temperature thickness swelling rate of the lithium-ion battery were tested.
Capacity retention rate after 400 cycles of the lithium-ion battery = discharge capacity after 400 cycles/discharge capacity after the first cycle $\times$ 100%.
Thickness swelling rate after 400 cycles of the lithium-ion battery = thickness of the lithium-ion battery after 400 cycles/thickness of the lithium-ion battery at the first cycle $\times$ 100%.

**Hot box pass rate test for lithium-ion battery:**

The lithium-ion battery was placed in a sealed temperature-controlled box. At 25°C, the lithium-ion battery was charged at a constant current of 0.7C to a voltage of 4.5 V, then charged at a constant voltage of 4.5 V to a current of 0.05C. The temperature-controlled box was then heated at a rate of $(5\pm2)$°C/min. When the temperature reached 135°C, the temperature was maintained for 60 minutes. After the temperature-controlled box naturally cooled, it was observed whether the lithium-ion battery ignited or exploded. If the lithium-ion battery did not ignite or explode, it passed the test. For each example or comparative example, 10 lithium-ion batteries were tested, and the number of batteries n that passed the hot box was recorded as n/10.

**Example 1**

**<Preparation of negative electrode plate>**

Artificial graphite, conductive carbon black (SP), sodium carboxymethyl cellulose (CMC), and styrene butadiene rubber (SBR) were mixed at a mass ratio of 96.5:1:1:1.5, and deionized water was added to prepare a slurry with a solid content of 75wt%, and the slurry was stirred to uniformity. The slurry was uniformly applied on one surface of a 6 μm-thick negative electrode current collector copper foil and dried at 85°C to obtain a negative electrode plate with a 50 μm-thick negative electrode active material layer. Then, the above steps were repeated on another surface of the negative electrode plate to obtain a negative electrode plate coated with the negative electrode active material on two sides. Then, the obtained negative electrode plate was cold pressed, and then grooves were etched on a surface of the negative electrode active material layer using laser processing technology. After slitting and cutting, cleansing was performed to obtain the tab welding region, and then the tab was welded to obtain the negative electrode plate. The parameters such as the groove depth H, the groove width W, the groove spacing S, the cross-sectional area of the groove, and the porosity of the negative electrode plate are shown in Table 1.

**<Preparation of positive electrode plate>**

Lithium cobalt oxide, polyvinylidene fluoride, and conductive agent Super P were mixed at a mass ratio of 96:2:2, N-methyl-2-pyrrolidone (NMP) was added as a solvent to prepare a slurry with a solid content of 75wt%, and the mixture was stirred to uniformity. The slurry was uniformly applied on one surface of a 6 μm-thick positive electrode current collector aluminum foil and dried at 95°C to obtain a positive electrode plate with a 60 μm-thick positive electrode active material layer. Then, the above steps were repeated on another surface of the positive electrode plate to obtain a positive electrode plate coated with the positive electrode active material on two sides. The obtained positive electrode plate was cold pressed, slitted, and cut, and then dried at 85°C under vacuum for 4 hours. Finally, the tab was welded to obtain the positive electrode plate.

**<Preparation of electrolyte>**

Ethylene carbonate, diethyl carbonate, methyl ethyl carbonate, and vinylene carbonate were mixed at a mass ratio of 8:85:5:2 to obtain a non-aqueous organic solvent. Then, the lithium salt $LiPF_6$ was added to the non-aqueous organic solvent obtained above at a mass ratio of 8:92 to prepare the electrolyte.

**<Preparation of separator>**

<Preparation of substrate layer>

A polypropylene film with a thickness of 5 $\mu$m was used.

<Preparation of inorganic coating>

Alumina ceramic particles, butadiene-styrene polymer, and deionized water were mixed at a mass ratio of 35:10:55. The butadiene-styrene polymer and deionized water (a total of 30 Kg) were added to a double planetary mixer with a volume of 60 L and dispersed at 45°C for 3 hours; then 16.1 Kg of alumina ceramic powder was added to the mixer and dispersed at high speed at 45°C for 2 hours; then the mixture was ball milled through a nano grinding mill for 1.5 hours, using spherical zirconia beads with a 6 $\mu$m diameter as the grinding medium, to obtain the inorganic coating slurry.
A surface of the substrate was coated using a transfer coating method, with a coating speed of 6 m/min and a coating amount adjusted to 0.18 mg/cm$^2$, resulting in a coating thickness of 1.5 $\mu$m. A three-stage drying method was used, with the oven for each stage being 3 m long and the oven temperatures set to 50°C, 60°C, and 60°C, forming a substrate layer coated the inorganic coating on one side. Then, the above steps were repeated on another surface of the substrate layer, so that the inorganic coating was coated on two sides.

<Preparation of adhesive layer>

Polymer particles with a core-shell structure were used, where the shell was a styrene-acrylate copolymer and the core was an acrylate polymer, with a total swelling degree of 450% and a particle size of 0.45 $\mu$m. The polymer adhesive layer slurry was made from 25 parts by mass of core-shell structure polymer emulsion (solid content 40%), 40 parts by mass of deionized water, and 35 parts by mass of ethanol. The preparation process was as follows: First, deionized water and ethanol solvent (a total of 50 Kg) were added to a double planetary mixer and mixed at 25°C for 1 hour; then, 16.7 Kg of core-shell structure polymer emulsion was added and the mixture was dispersed at 45°C for 2 hours to obtain a polymer adhesive layer slurry.
A surface of the porous substrate + heat-resistant coating was coated using a gravure roller coating method to form a double-sided coating structure, with consistent mass and thickness for coatings on two sides. The coating speed was 6 m/min, and the coating amount was adjusted to 0.036 mg/cm$^2$. A three-stage drying method was used, with the oven for each stage being 3 m long, and the oven temperatures set to 50°C, 60°C, and 60°C. After drying, a polymer adhesive layer with a single-layer of stacked particles was obtained.

**<Preparation of lithium-ion battery>**

The prepared positive electrode plate, separator, and negative electrode plate were stacked in sequence, with the grooves of the negative electrode plate facing the positive electrode plate and the separator sandwiched between the positive electrode plate and the negative electrode plate for separation. Then the resulting stack was wound to obtain an electrode assembly, and the thickness of the electrode assembly is shown in Table 1. The electrode assembly was put into an aluminum-plastic film packaging bag which was filled with the electrolyte after drying, followed by processes such as vacuum packaging, standing, formation, degassing, and cutting to obtain a lithium-ion battery.

**Example 2 to Example 18, Example 20 to Example 21, Example 23 to Example 27**

In <Preparation of negative electrode plate>, the parameters were adjusted based on Example 1 according to Table 2.

**Example 19 and Example 22**

Except for the adjustment of the preparation of the adhesive layer slurry in **<Preparation of separator>,** the other parameters were adjusted based on Example 1 according to Table 2.
Polymer particles with a core-shell structure were used, where the shell was a styrene-acrylate copolymer and the core was an acrylate polymer, with a total swelling degree of 450% and a particle size of 0.45 $\mu$m. The polymer adhesive layer slurry was made from 25 parts by mass of core-shell structure polymer emulsion (solid content 25%), 40 parts by mass of deionized water, and 35 parts by mass of ethanol. The preparation process was as follows: First, deionized water and ethanol solvent (a total of 50 Kg) were added to a double planetary mixer and mixed at 25°C for 1 hour; then, 16.7 Kg of core-shell structure polymer emulsion was added and the mixture was dispersed at 45°C for 2 hours to obtain a polymer adhesive layer slurry.

**Example 28**

Except for the adjustment of the preparation of the adhesive layer slurry and the preparation of the adhesive layer in **<Preparation of separator>,** the other parameters were adjusted based on Example 1 according to Table 2.

Preparation of the adhesive layer slurry: Polyvinylidene fluoride-hexafluoropropylene copolymer was used as the polymer, with a swelling degree of 190% and a particle size of 1.5 $\mu$m. 68 Kg of deionized water and 12 Kg of PVDF-HFP were added to a double planetary mixer and mixed at 45°C for 6 hours to prepare a polymer adhesive layer slurry with a solid content of approximately 15%.

Preparation of the adhesive layer: A surface of the porous substrate + heat-resistant coating was coated using a rotary spray method to form a double-sided coating structure, with consistent mass and thickness for coatings on two sides. The coating speed was 8 m/min, and the coating amount was adjusted to 0.16 mg/cm$^2$. A three-stage drying method was used, with the oven for each stage being 3 m long and the oven temperatures set to 50°C, 60°C, and 60°C. After drying, the polymer adhesive layer was distributed in an island and line pattern on the heat-resistant coating, where the islandshaped coating has an area of 1 $\mu$m to 10 mm, and a thickness of 1 $\mu$m to 100 $\mu$m; and the line-shaped coating has a width of 1 $\mu$m to 1 mm, a length of 1 $\mu$m to 50 mm, and a thickness of 1 $\mu$m to 100 $\mu$m.

**Example 29 to Example 31**

Except for the adjustment of <Preparation of separator>, the other parameters were adjusted based on Example 1 according to Table 2.

**<Preparation of separator>:**

<Preparation of substrate layer>

A polypropylene film with a thickness of 9 $\mu$m was used.

<Preparation of adhesive layer>

Polyvinylidene fluoride and alumina ceramic particles were mixed at a mass ratio of 60:40, and NMP was added as a solvent to prepare an adhesive layer slurry with a solid content of 75wt%, and the mixture was stirred to uniformity. The adhesive layer slurry was coated on one surface of the substrate layer and dried at 90°C to obtain the adhesive layer. The thickness of the adhesive layer is shown in Table 1. Then, the above steps were repeated on another surface of the substrate layer to form an adhesive layer (that is, the first adhesive layer) applied on two sides, and the separator was obtained.

**Comparative Example 1**

The same as Example 1 except for <Preparation of negative electrode plate> was different from Example 1.

**<Preparation of negative electrode plate>**

Artificial graphite, conductive carbon black (SP), sodium carboxymethyl cellulose (CMC), and styrene butadiene rubber (SBR) were mixed at a mass ratio of 96.5:1:1:1.5, and deionized water was added to prepare a slurry with a solid content of 75wt%, and the slurry was stirred to uniformity. The slurry was uniformly applied on one surface of a 6 $\mu$m-thick negative electrode current collector copper foil and dried at 85°C to obtain a negative electrode plate with a 50 $\mu$m-thick negative electrode active material layer. Then, the above steps were repeated on another surface of the negative electrode plate to obtain a negative electrode plate coated with the negative electrode active material on two sides. After slitting and cutting, the plate was dried at 110°C under vacuum for 4 hours, and then the tab was welded to obtain the negative electrode plate.

**Comparative Example 2 to Comparative Example 3**

The same as Example 1 except for the adjustment of the preparation parameters such as the groove depth H and cross-sectional area A of the groove in <Preparation of negative electrode plate>, as shown in Table 1, and the adjustment of the thickness of the adhesive layer in <Preparation of separator>, as shown in Table 1.

**Comparative Example 4**

In <Preparation of negative electrode plate>, the parameters were adjusted based on Example 29 according to Table 1.

**Table 1**

| | Adhesive layer thickness T ($\mu$m) | Groove depth H ($\mu$m) | Groove width W ($\mu$m) | Groove spacing S ($\mu$m) | Adhesion force F (N/m) | Satisfies H$\geq$T+1 | Hot-box pass rate |
|---|---|---|---|---|---|---|---|
| Example 10 | 2 | 8 | 100 | 1000 | 12.6 | Yes | 9/10 |
| Example 11 | 5 | 35 | 100 | 2000 | 12.2 | Yes | 10/10 |
| Comparative Example 1 | 0.5 | / | / | / | 12.1 | / | 0/10 |
| Comparative Example 2 | 5 | 5.5 | 100 | 1000 | 12.5 | No | 3/10 |
| Comparative Example 3 | 2 | 2.5 | 100 | 1000 | 11.7 | No | 2/10 |
| Comparative Example 4 | 2 | 2.5 | 100 | 1000 | 11.3 | No | 1/10 |
| Note: "/" in Table 1 means that a related preparation parameter does not exist. | | | | | | | |

Referring to Table 1, from Example 10 to Example 11 and Comparative Example 1 to Comparative Example 4, it can be seen that in the lithium-ion battery of this application, by having the surface of the negative electrode active material layer opposite the positive electrode plate provided with grooves and by adjusting the relationship between the groove depth and the adhesive layer thickness of the separator within a range in this application, the lithium-ion battery has a significantly improved hot box passing rate, and also a significantly reduced thickness swelling rate after cycling, indicating that the solution of this application can improve the heat dissipation capability inside the lithium-ion battery, thereby enhancing the cycling stability and safety of the lithium-ion battery at high temperatures.

**Table 2**

| | Adhesiv e layer thicknes s T ($\mu$m) | Groove depth H ($\mu$m) | Groove width W ($\mu$m) | Groove spacin g S ($\mu$m) | Porosity | Groove cross-sectional area A ($\mu$m$^2$) | Adhesive force F (N/m) |
|---|---|---|---|---|---|---|---|
| Example 1 | 0.1 | 5.5 | 100 | 1000 | 30% | 430 | 11.8 |
| Example 2 | 0.2 | 5 | 100 | 2000 | 30% | 412 | 11.8 |
| Example 3 | 0.5 | 8 | 100 | 2000 | 30% | 584 | 12.3 |
| Example 4 | 0.5 | 10 | 100 | 2000 | 30% | 687 | 12.1 |
| Example 5 | 0.5 | 15 | 100 | 2000 | 30% | 995 | 11.9 |
| Example 6 | 0.5 | 20 | 100 | 2000 | 30% | 1342 | 11.5 |
| Example 7 | 0.5 | 50 | 100 | 2000 | 30% | 3254 | 11.4 |
| Example 8 | 1 | 5 | 100 | 2000 | 30% | 418 | 12.8 |
| Example 9 | 1 | 8 | 200 | 2000 | 30% | 960 | 12.6 |
| Example 10 | 2 | 8 | 100 | 1000 | 30% | 579 | 12.6 |
| Example 11 | 5 | 35 | 100 | 2000 | 30% | 2235 | 12.2 |
| Example 12 | 8 | 90 | 200 | 2000 | 30% | 6550 | 11.1 |

(continued)

| | Adhesive layer thickness T (μm) | Groove depth H (μm) | Groove width W (μm) | Groove spacing S (μm) | Porosity | Groove cross-sectional area A (μm²) | Adhesive force F (N/m) |
|---|---|---|---|---|---|---|---|
| Example 13 | 8 | 100 | 200 | 4000 | 30% | 6800 | 11.1 |
| Example 14 | 8 | 100 | 100 | 2000 | 30% | 3125 | 11.1 |
| Example 15 | 15 | 50 | 100 | 2000 | 30% | 3286 | 12.5 |
| Example 16 | 0.5 | 18 | 50 | 2000 | 30% | 613 | 11.3 |
| Example 17 | 0.5 | 18 | 50 | 5000 | 30% | 608 | 11.2 |
| Example 18 | 0.5 | 18 | 50 | 8000 | 30% | 611 | 11.5 |
| Example 19 | 0.5 | 18 | 100 | 8000 | 30% | 1107 | 7.8 |
| Example 20 | 0.5 | 10 | 500 | 2000 | 30% | 3112 | 11.5 |
| Example 21 | 0.5 | 18 | 100 | 500 | 30% | 1121 | 11.9 |
| Example 22 | 0.5 | 18 | 100 | 10000 | 30% | 1102 | 7.6 |
| Example 23 | 0.5 | 18 | 100 | 2000 | 5% | 1098 | 12.7 |
| Example 24 | 0.5 | 18 | 100 | 2000 | 10% | 1112 | 12.8 |
| Example 25 | 0.5 | 18 | 100 | 2000 | 35% | 1103 | 12.5 |
| Example 26 | 0.5 | 18 | 100 | 2000 | 40% | 1121 | 12.4 |
| Example 27 | 0.5 | 18 | 100 | 2000 | 20% | 1105 | 12.8 |
| Example 28 | 2 | 18 | 100 | 2000 | 20% | 1118 | 2.6 |
| Example 29 | 2 | 8 | 100 | 1000 | 30% | 579 | 12.6 |
| Example 30 | 2 | 5 | 100 | 1000 | 30% | 362 | 12.4 |
| Example 31 | 2 | 20 | 100 | 1000 | 30% | 1086 | 12.4 |

**Table 3**

| | Satisfies H≥T+5 | Satisfies 0.35(W×H) <A< 0.95(W×H) | Satisfies 0.55(W×H) <A< 0.85(W×H) | W/H | Satisfies 0.03×P≤ W/S | Satisfies 0.08×P≤W/ S≤3×P | Satisfies S≤1000F | Satisfies S≤650F | High-temperature capacity retention rate | High-temperature thickness swelling rate | **Hot**-box pass rate |
|---|---|---|---|---|---|---|---|---|---|---|---|
| Example 1 | Yes | Yes | Yes | 18.2 | Yes | Yes | Yes | Yes | 9.2% | 81.8% | 8/10 |
| Example 2 | No | Yes | Yes | 20 | Yes | Yes | Yes | Yes | 9.3% | 81.4% | 7/10 |
| Example 3 | Yes | Yes | Yes | 12.5 | Yes | Yes | Yes | Yes | 8.8% | 82.5% | 8/10 |
| Example 4 | Yes | Yes | Yes | 10 | Yes | Yes | Yes | Yes | 8.6% | 82.5% | 9/10 |
| Example 5 | Yes | Yes | Yes | 6.7 | Yes | Yes | Yes | Yes | 7.4% | 85.7% | 10/10 |
| Example 6 | Yes | Yes | Yes | 5 | Yes | Yes | Yes | Yes | 7.2% | 85.5% | 10/10 |
| Example 7 | Yes | Yes | Yes | 2 | Yes | Yes | Yes | Yes | 7.5% | 85.0% | 10/10 |
| Example 8 | No | Yes | Yes | 20 | Yes | Yes | Yes | Yes | 9.0% | 82.1% | 7/10 |
| Example 9 | Yes | Yes | Yes | 25 | Yes | Yes | Yes | Yes | 8.6% | 81.9% | 8/10 |
| Example 10 | Yes | Yes | Yes | 12.5 | Yes | Yes | Yes | Yes | 7.6% | 84.8% | 9/10 |
| Example 11 | Yes | Yes | Yes | 2.9 | Yes | Yes | Yes | Yes | 8.3% | 83.4% | 10/10 |
| Example 12 | Yes | Yes | No | 2.2 | Yes | Yes | Yes | Yes | 9.1% | 81.7% | 8/10 |
| Example 13 | Yes | No | No | 2.0 | Yes | Yes | Yes | Yes | 10.3% | 79.4% | 6/10 |
| Example 14 | Yes | No | No | 1.0 | Yes | Yes | Yes | Yes | 10.7% | 78.5% | 5/10 |
| Example 15 | Yes | Yes | Yes | 2.0 | Yes | Yes | Yes | Yes | 9.3% | 81.4% | 7/10 |
| Example 16 | Yes | Yes | Yes | 2.8 | Yes | Yes | Yes | Yes | 8.2% | 83.6% | 10/10 |
| Example 17 | Yes | Yes | Yes | 2.8 | Yes | No | Yes | Yes | 8.5% | 83.0% | 9/10 |
| Example 18 | Yes | Yes | Yes | 2.8 | No | No | Yes | No | 9.8% | 80.4% | 7/10 |
| Example 19 | Yes | Yes | Yes | 5.6 | Yes | No | No | No | 11.7% | 76.3% | 7/10 |
| Example 20 | Yes | Yes | Yes | 50 | Yes | Yes | Yes | Yes | 10.1% | 79.8% | 8/10 |
| Example 21 | Yes | Yes | Yes | 5.6 | Yes | Yes | Yes | Yes | 8.2% | 83.6% | 10/10 |
| Example 22 | Yes | Yes | Yes | 5.6 | Yes | No | No | No | 11.9% | 75.5% | 7/10 |
| Example 23 | Yes | Yes | Yes | 5.6 | Yes | Yes | Yes | Yes | 9.1% | 81.9% | 8/10 |
| Example 24 | Yes | Yes | Yes | 5.6 | Yes | Yes | Yes | Yes | 8.7% | 82.9% | 9/10 |

(continued)

| | Satisfies H≥T+5 | Satisfies 0.35(W×H) <A< 0.95(W×H) | Satisfies 0.55(W×H) <A< 0.85(W×H) | W/H | Satisfies 0.03×P≤ W/S | Satisfies 0.08×P≤W/ S≤3×P | Satisfies S≤1000F | Satisfies S≤650F | High-temperature capacity retention rate | High-temperature thickness swelling rate | Hot-box pass rate |
|---|---|---|---|---|---|---|---|---|---|---|---|
| Example 25 | Yes | Yes | Yes | 5.6 | Yes | Yes | Yes | Yes | 7.3% | 85.4% | 10/10 |
| Example 26 | Yes | Yes | Yes | 5.6 | Yes | Yes | Yes | Yes | 8.1% | 84.6% | 10/10 |
| Example 27 | Yes | Yes | Yes | 5.6 | Yes | Yes | Yes | Yes | 8.3% | 84.5% | 10/10 |
| Example 28 | Yes | Yes | Yes | 5.6 | Yes | Yes | Yes | Yes | 13.7% | 73.7% | 10/10 |
| Example 29 | Yes | Yes | Yes | 12.5 | Yes | Yes | Yes | Yes | 8.1% | 84.8% | 9/10 |
| Example 30 | No | Yes | Yes | 20 | Yes | Yes | Yes | Yes | 8.6% | 81.8% | 7/10 |
| Example 31 | Yes | Yes | No | 5 | Yes | Yes | Yes | Yes | 8.5% | 82.6% | 8/10 |
| In Table 3, "/" means not measured. | | | | | | | | | | | |

Referring to Table 2 and Table 3, the groove width, groove spacing, cross-sectional area, and porosity of the negative electrode plate usually affect the performance of a lithium-ion battery. From Example 1 to Example 22 and Comparative Example 4, it can be seen that under the condition of satisfying $H \geq T + 1$, through the controlling of the above parameters within a range in this application, a lithium-ion battery with excellent cycling stability and safety at high temperatures can be obtained.

The type of polymer in the adhesive layer usually affects the performance of the lithium-ion battery. From Example 19, Example 22, and Example 28 to Example 31, it can be seen that under the condition of satisfying $H \geq T + 1$, through the controlling the above parameters within a range of this application, a lithium-ion battery with excellent cycling stability and safety at high temperatures can be obtained.

It should be noted the term "include", "comprise", or any of their variants are intended to cover a non-exclusive inclusion, so that a process, a method, an article, or a device that includes a list of elements not only includes those elements but also includes other elements that are not expressly listed, or further includes elements inherent to such process, method, article, or device. In absence of more constraints, an element preceded by "includes a..." does not preclude existence of other identical elements in the process, method, article, or device that includes the element.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. A secondary battery, comprising an electrode assembly, wherein the electrode assembly comprises a positive electrode plate, a negative electrode plate, and a separator, the separator being disposed between the positive electrode plate and the negative electrode plate, and the negative electrode plate comprises a negative electrode current collector and a negative electrode active material layer, wherein

   a surface of the negative electrode active material layer opposite the positive electrode plate has a groove, a depth of the groove being H $\mu$m; and
   the separator comprises a substrate layer and an adhesive layer disposed on a surface of the separator opposite the negative electrode plate, a thickness of the adhesive layer being T $\mu$m, and satisfying: $H \geq T + 1$.

2. The secondary battery according to claim 1, wherein $H \geq T + 5$.

3. The secondary battery according to claim 1, wherein a cross-sectional area of the groove is A $\mu$m$^2$, and a width of the groove is W $\mu$m, satisfying: $0.35 \times (W \times H) < A < 0.95 \times (W \times H)$, and $5 \leq H \leq 100$.

4. The secondary battery according to claim 3, wherein $1 \leq W/H \leq 40$, and $0.55 \times (W \times H) < A < 0.85 \times (W \times H)$.

5. The secondary battery according to claim 3, wherein $2 \leq W/H \leq 20$.

6. The secondary battery according to claim 1, wherein a width of the groove is W $\mu$m, a spacing of the grooves is S $\mu$m, and a porosity of the negative electrode plate is P%, satisfying:

$$W/S \geq 0.03 \times P.$$

7. The secondary battery according to claim 6, wherein

$$0.08 \times P \leq W/S \leq 3 \times P$$

and

$$10 \leq P \leq 40.$$

8. The secondary battery according to claim 1, wherein a spacing of the grooves is S $\mu$m, and an adhesion force between the separator and the negative electrode plate is F N/m, satisfying: $S \leq 1000F$, and $500 \leq S \leq 10000$.

9. The secondary battery according to claim 8, wherein $S \leq 650F$.

10. The secondary battery according to claim 1, wherein $0.1 \leq T \leq 10$.

11. The secondary battery according to claim 1, wherein the adhesive layer comprises a polymer; wherein based on a mass of the adhesive layer, a percentage of the polymer is 25% to 100%.

12. The secondary battery according to claim 11, wherein an adhesion force between the separator and the negative electrode plate is F N/m, satisfying: $1 \leq F \leq 50$.

13. The secondary battery according to claim 11, wherein an adhesion force between the separator and the negative electrode plate is F N/m, satisfying $5 \leq F \leq 30$; wherein based on a mass of the adhesive layer, a percentage of the polymer is 30% to 100%.

14. The secondary battery according to claim 11, wherein the polymer comprises at least one of polyvinylidene fluoride, polyvinylidene fluoride-hexafluoropropylene copolymer, styrene-butadiene copolymer, polyacrylonitrile, butadiene-acrylonitrile polymer, polyacrylic acid, polyacrylate, or acrylate-styrene copolymer.

15. The secondary battery according to claim 1, wherein the negative electrode plate further comprises a negative electrode tab, and along a length direction of the negative electrode tab, a first groove portion is provided, and along the length direction of the negative electrode tab, the negative electrode active material layer is provided between the first groove portion and the negative electrode tab; wherein a distance between the first groove portion and the negative electrode tab is d mm, wherein $0.2 < d < 5$.

16. An electronic apparatus, comprising the secondary battery according to any one of claims 1 to 15.

FIG. 1

FIG. 2

FIG. 3

FIG. 4

FIG. 5

FIG. 6

FIG. 7

FIG. 8

# EP 4 661 091 A1

## INTERNATIONAL SEARCH REPORT

| | International application No. |
|---|---|
| | **PCT/CN2023/074396** |

**A. CLASSIFICATION OF SUBJECT MATTER**

H01M4/13(2010.01)i; H01M10/0585(2010.01)n; H01M10/052(2010.01)n; H01M4/139(2010.01)n

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, VEN, WPABSC, ENTXT, DWPI, WPABS: 凹, 槽, 分隔, 缝, 负极, 隔板, 隔膜, 开口, 坑, 空隙, 空隙率, 孔, 孔隙, 孔隙率, 率, 凸, 阳极, 粘, 粘附, 粘合, 粘结, 黏附, 黏合, 黏结, negative, anode, open+, convex, concave, hole, separator, adhe+, bond+, ratio

**C. DOCUMENTS CONSIDERED TO BE RELEVANT**

| Category* | Citation of document, with indication, where appropriate, of the relevant passages | Relevant to claim No. |
|---|---|---|
| X | US 5981107 A (MITSUBISHI DENKI KABUSHIKI KAISHA) 09 November 1999 (1999-11-09)<br>description, column 5, line 57 to column 12, last line, and figures 1-6 | 1-2, 8-16 |
| Y | US 5981107 A (MITSUBISHI DENKI KABUSHIKI KAISHA) 09 November 1999 (1999-11-09)<br>description, column 5, line 57 to column 12, last line, and figures 1-6 | 3-7 |
| Y | CN 114335560 A (ZHUHAI COSMX BATTERY CO., LTD.) 12 April 2022 (2022-04-12)<br>description, paragraphs [0024]-[0049], and figure 2 | 3-5 |
| Y | JP 2006134891 A (MITSUI MINING & SMELTING CO., LTD.) 25 May 2006 (2006-05-25)<br>description, paragraphs [0010]-[0045], and figures 1-4 | 6-7 |
| A | CN 102881860 A (HITACHI, LTD.) 16 January 2013 (2013-01-16)<br>entire document | 1-16 |
| A | CN 110752345 A (HUIZHOU EVE ENERGY CO., LTD.) 04 February 2020 (2020-02-04)<br>entire document | 1-16 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 August 2023** | **23 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/074396** |

## C.    DOCUMENTS CONSIDERED TO BE RELEVANT

| Category* | Citation of document, with indication, where appropriate, of the relevant passages | Relevant to claim No. |
|---|---|---|
| A | CN 115425301 A (LISHEN (QINGDAO) NEW ENERGY CO., LTD.) 02 December 2022 (2022-12-02)<br>entire document | 1-16 |
| A | JP 2008010253 A (TOYOTA CHUO KENKYUSHO K.K.) 17 January 2008 (2008-01-17)<br>entire document | 1-16 |
| A | JP 2013058427 A (DAINIPPON SCREEN MANUFACTURING CO., LTD.) 28 March 2013 (2013-03-28)<br>entire document | 1-16 |
| A | JP 2021190288 A (PRIMEARTH EV ENERGY CO., LTD.) 13 December 2021 (2021-12-13)<br>entire document | 1-16 |

**INTERNATIONAL SEARCH REPORT**
Information on patent family members

International application No.

**PCT/CN2023/074396**

| Patent document cited in search report | | | Publication date (day/month/year) | Patent family member(s) | | | Publication date (day/month/year) |
|---|---|---|---|---|---|---|---|
| US | 5981107 | A | 09 November 1999 | KR | 19980064085 | A | 07 October 1998 |
| | | | | KR | 100287004 | B1 | 16 April 2001 |
| | | | | EP | 0849819 | A2 | 24 June 1998 |
| | | | | EP | 0849819 | A3 | 24 September 2003 |
| | | | | JPH | 10172537 | A | 26 June 1998 |
| | | | | JP | 3303694 | B2 | 22 July 2002 |
| CN | 114335560 | A | 12 April 2022 | None | | | |
| JP | 2006134891 | A | 25 May 2006 | WO | 2006027886 | A1 | 09 March 2006 |
| | | | | JP | 3764470 | B1 | 05 April 2006 |
| | | | | JP | 2006108066 | A | 20 April 2006 |
| | | | | CN | 101015075 | A | 08 August 2007 |
| | | | | TW | I310994 | B | 11 June 2009 |
| | | | | CN | 100514716 | C | 15 July 2009 |
| | | | | US | 7838154 | B2 | 23 November 2010 |
| | | | | US | 2006051677 | A1 | 09 March 2006 |
| CN | 102881860 | A | 16 January 2013 | US | 2013017444 | A1 | 17 January 2013 |
| | | | | JP | 2013020820 | A | 31 January 2013 |
| CN | 110752345 | A | 04 February 2020 | None | | | |
| CN | 115425301 | A | 02 December 2022 | CN | 218101405 | U | 20 December 2022 |
| JP | 2008010253 | A | 17 January 2008 | None | | | |
| JP | 2013058427 | A | 28 March 2013 | JP | 5779455 | B2 | 16 September 2015 |
| JP | 2021190288 | A | 13 December 2021 | JP | 7278989 | B2 | 22 May 2023 |

Form PCT/ISA/210 (patent family annex) (July 2022)